# FASCICULE DE BREVET EUROPEEN

(11) **EP 2 751 633 B1**
(45) Date de publication et mention de la délivrance du brevet: **09.03.2016**
(21) Numéro de dépôt: 12756781.6
(22) Date de dépôt: 20.08.2012
(51) Int. Cl.: G05D 16/06, F17C 13/04, F16K 1/30

(54) **DÉTENDEUR DE GAZ À UN ÉTAGE**
EINSTUFIGER DRUCKMINDERER FÜR GAS
ONE-STAGE PRESSURE REDUCER FOR GAS

(30) Priorité: 01.09.2011 FR 1157754
(43) Date de publication de la demande: 09.07.2014
(73) Titulaire: Hampiaux S.A.S., 54000 Nancy (FR)
(72) Inventeur: HAMPIAUX, Claude, F-54520 Laxou (FR)
(74) Mandataire: Novagraaf Technologies
(86) Numéro de dépôt international: PCT/FR2012/051911
(87) Numéro de publication internationale: WO 2013/030491

(56) Documents cités:
- WO-A1-2006/022455
- FR-A1- 2 859 289
- US-A1- 2010 147 400

## Description

### DOMAINE DE L'INVENTION

L'invention concerne un détendeur de gaz à un étage pour outillage à main, en particulier pour alimenter en gaz des appareils de soudure ou d'oxycoupage. Un tel détendeur est destiné à être placé sur des bouteilles de gaz comprimé, telles que par exemple des bouteilles d'acétylène, d'oxygène ou d'azote.

### TECHNIQUE ANTÉRIEURE

On connaît déjà de tels détendeurs qui permettent de disposer du gaz à un niveau de pression sensiblement constant au cours de l'utilisation et ajustable en fonction de l'utilisation qui en est faite. Par exemple, l'acétylène peut être utilisé pour le soudage, auquel cas il est intéressant de fournir le gaz à une pression comprise entre 0,2 et 0,5 bar. Le même gaz peut être utilisé pour l'oxycoupage, auquel cas il est préférable d'alimenter un chalumeau à une pression comprise entre 0,5 et 1 bar. Concernant l'oxygène, celui-ci peut être fourni entre 1 et 1,5 bar pour le soudage, et entre 3 et 8 bar pour l'oxycoupage.

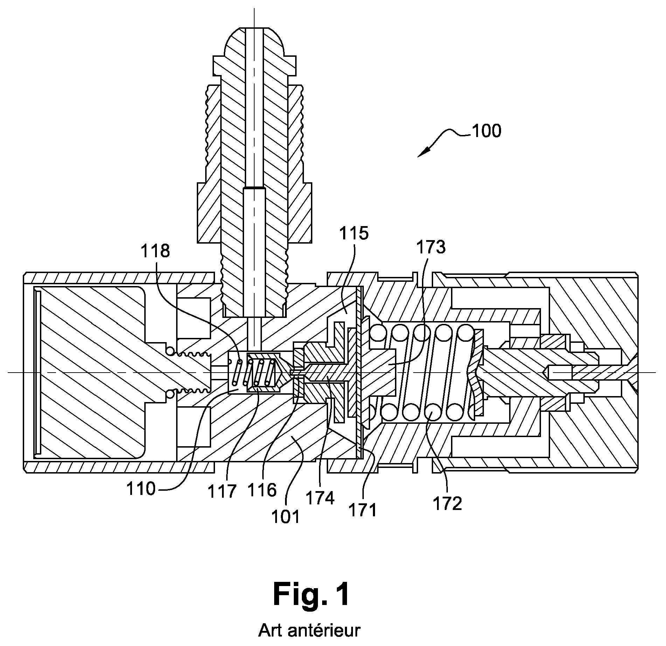

Un détendeur 100 comporte classiquement, comme montré sur la figure 1, une chambre haute pression 110 et une chambre basse pression 115 reliées par un conduit 116 obturé par un clapet 117. Le clapet est poussé par un ressort 118 sur un siège au débouché du conduit dans la chambre haute pression 110, tandis qu'un poussoir 174 relié à une membrane 171 agit de manière antagoniste pour soulever le clapet 116 de son siège et laisser passer du gaz de la chambre haute pression 110 vers la chambre basse pression 115. Un autre ressort dit de détente 172 agit également sur la membrane 171 à l'opposé de la tige avec une force ajustable. Cette force détermine la pression dans la chambre basse pression par l'équilibre qui est obtenu entre l'action des ressorts et celle du gaz sur la membrane.

On constate que ce principe de détendeur donne globalement satisfaction lorsque le détendeur est utilisé sur la même bouteille de gaz à plusieurs reprises, la pression détendue étant réglée à chaque fois à l'aide d'un manomètre qui indique la valeur de la pression détendue. Cependant, lors d'une utilisation prolongée, sans réglage entre la phase de bouteille pleine et la phase de bouteille à pression non utilisable, la pression détendue augmente lorsque la pression dans la bouteille diminue. Il est alors nécessaire de rectifier le réglage de la pression de détente. Ceci s'explique par le fait que la pression dans la chambre haute pression agit sur le clapet, sauf au niveau de la section délimitée par le siège au niveau du débouché. Le bilan des forces dues aux pressions tend à plaquer le clapet sur le siège et dépend donc de la pression dans la chambre haute pression. Lorsque celle-ci diminue, le bilan des forces sur le clapet diminue, ce qui a tendance à soulever plus le clapet et à laisser passer plus de gaz. La pression dans la chambre basse pression a ainsi tendance à augmenter.

Le document FR 2 859 289 A1 montre un dispositif de détente comportant deux étages de détente, avec une pression intermédiaire. On peut par ce moyen s'affranchir des variations de pression da ns la bouteille en alimentant le deuxième étage avec une pression sensiblement constante. Cependant, une tell solution exige la construction de deux étage de détente, ce qui multiplie le nombre de pièces à prévoir.

### OBJECTIFS DE L'INVENTION

L'invention vise à fournir un détendeur dont la pression de détente soit stable, même avec une variation de la pression d'alimentation, en particulier en provenance d'une bouteille de gaz, et avec des coûts maîtrisés.

### EXPOSÉ DE L'INVENTION

Avec ces objectifs en vue, l'invention a pour objet un détendeur de gaz comprimé comportant un corps, une chambre haute pression logée dans le corps et destinée à être reliée à un réservoir de gaz comprimé, une chambre basse pression pour recevoir le gaz détendu et le délivrer, des moyens de détente pour réduire la pression du gaz en provenance de la chambre haute pression à niveau de pression prédéterminé vers la chambre basse pression, les moyens de détente comportant un clapet, un conduit reliant la chambre haute pression à la chambre basse pression, le clapet étant logé dans la chambre haute pression et étant en appui contre un siège au débouché du conduit dans la chambre haute pression, les moyens de détente comportant en outre un poussoir logé dans la chambre basse pression et en contact avec le clapet à travers le conduit et des moyens d'équilibrage agissant sur le clapet par l'intermédiaire du poussoir en fonction de la pression dans la chambre basse pression, caractérisé en ce que le clapet comporte une tige de section équivalente à celle du conduit au niveau du siège, la tige s'étendant jusque dans une chambre de compensation séparée de manière étanche de la chambre haute-pression.

Grâce à la chambre de compensation, la pression qui règne dans la chambre haute pression n'agit que sur des surfaces en opposition, de telle sorte que la résultante des forces de pression est sensiblement nulle. Une surface équivalente à celle qui débouche dans le conduit est soumise à la pression qui règne dans la chambre de compensation, laquelle ne varie pas. L'équilibre des forces sur le clapet ne varie donc pas en fonction de la haute pression. De ce fait la pression détendue est constante lorsque la bouteille de gaz se vide progressivement. Un autre avantage qui en découle est qu'il est possible de se passer du manomètre indiquant la basse pression. En effet, comme la pression est constante lors du vidage de la bouteille, on peut déterminer un niveau de pression du gaz détendu directement en fonction de la position de moyens de commande du niveau de pression.

Selon un premier mode de réalisation, la chambre de compensation est fermée. Cette réalisation est la plus simple puisque la chambre de compensation est un simple trou borgne dans le corps. On constate que l'amplitude du mouvement du clapet est faible et donc que le mouvement de la tige dans la chambre de compensation est faible et n'a pas d'influence sensible sur le niveau de pression du gaz enfermé dans la chambre de compensation.

Selon un deuxième mode de réalisation, la chambre de compensation est reliée à la pression atmosphérique. On a ainsi la garantie que la chambre de compensation est toujours au même niveau de pression.

Selon d'autres dispositions :
- le clapet est mis en appui contre le siège par un ressort de clapet prenant appui dans la chambre haute pression. Le clapet est ainsi toujours mis en contact avec le poussoir dont la position détermine celle du clapet ;
- le ressort de clapet est guidé par la tige. Il n'est ainsi pas besoin de forme ou de pièce spécifique pour obtenir cette fonction de guidage ;
- la chambre de compensation et la chambre haute pression sont séparées par un joint entourant la tige, par exemple un joint torique. On garantit ainsi que la chambre haute-pression n'est pas alimentée par le gaz de la chambre haute pression, tout en permettant le coulissement de la tige. La pression dans la chambre de compensation ne varie donc pas ;
- les moyens d'équilibrage comportent une membrane qui délimite la chambre basse pression, le poussoir étant en appui contre la membrane. La membrane capte la pression détendue et agit sur le poussoir en fonction de celle-ci ;
- les moyens d'équilibrage comportent en outre un plateau en appui sur la membrane par un ressort de détente, la membrane étant interposée entre le plateau et le poussoir. Le ressort de détente compense la force exercée sur la membrane par le gaz détendu dans la chambre basse pression. Il détermine également la position d'équilibre du poussoir et du clapet.

L'invention a aussi pour objet un procédé de montage d'un détendeur tel que défini précédemment, caractérisé en ce qu'on insère la tige dans la chambre de compensation en étant à pression atmosphérique. La quantité de gaz ainsi enfermé dans la chambre de compensation lorsque celle-ci est fermée sera ainsi sensiblement toujours à la pression atmosphérique, aux variations de pression induites par les variations de température près.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels :
- la figure 1 est une vue en coupe d'un détendeur selon l'art antérieur ;
- la figure 2 une vue de côté d'un détendeur conforme à l'invention ;
- la figure 3 est une vue de face du détendeur de la figure 2 ;
- la figure 4 est une vue en perspective du détendeur de la figure 2 ;
- la figure 5 est une vue en coupe selon la ligne V-V de la figure 3 ;
- la figure 6 est une vue du détail VI de la figure 5 ;
- la figure 7 est une vue en coupe selon la ligne VII-VII de la figure 5.

### DESCRIPTION DETAILLÉE

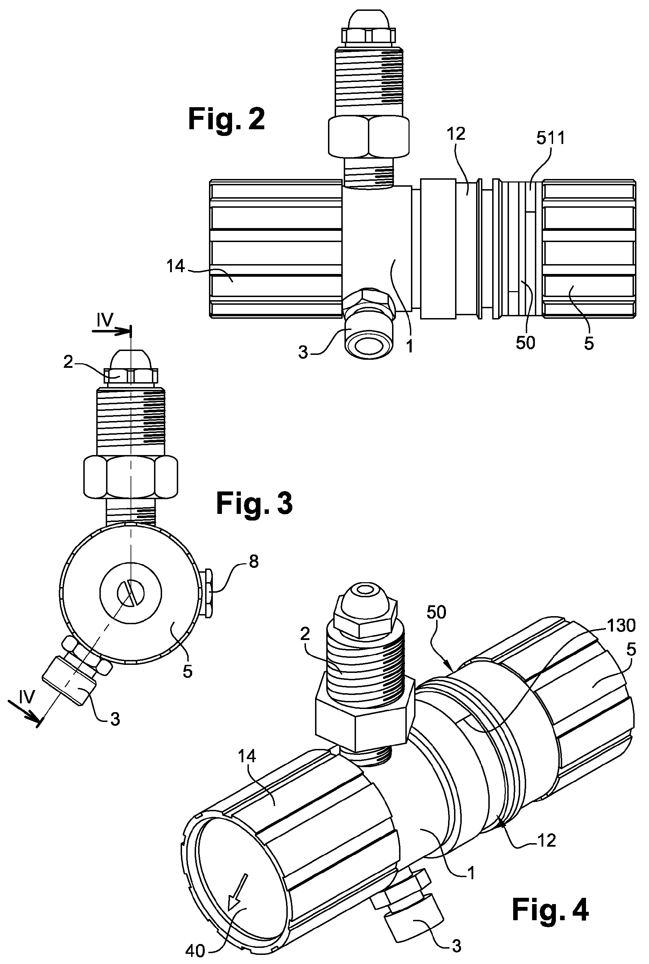

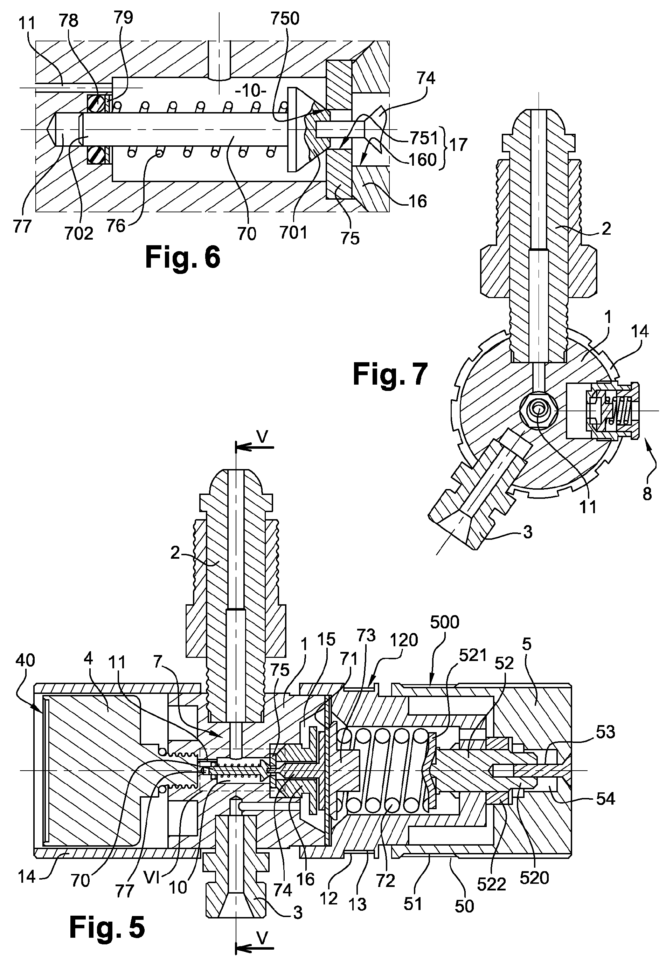

Le détendeur selon l'invention, représenté sur les figures 2 à 7, a un corps 1 de forme générale cylindrique sur lequel sont rapportés radialement un raccord d'entrée 2 et un raccord de sortie 3. Il est destiné à être connecté par le raccord d'entrée 2 à une bouteille de réserve d'un gaz comprimé, non représentée, et à délivrer par le raccord de sortie 3 le gaz à un niveau de pression régulé et inférieur à celui de la pression d'entrée. Le détendeur comporte à une première extrémité un manomètre 4 dont le cadran 40 s'étend le long d'une face frontale du cylindre. Le détendeur comporte à sa deuxième extrémité, à l'opposé de la première extrémité, un bouton 5 pivotant faisant partie des moyens de réglage permettant de contrôler le niveau de pression du gaz détendu.

Le raccord d'entrée 2 est en communication avec une chambre haute pression 10 ménagée dans le corps. Le manomètre 4 est fixé sur le corps 1 par vissage. Il est en communication avec un canal 11 en provenance de la chambre haute pression 10. Le manomètre 4 est entouré d'une coque 14 tubulaire intégrée au corps 1 par vissage. La coque 14 est par exemple métallique.

Le raccord de sortie 3 est en communication avec une chambre basse pression 15 également pratiquée dans le corps.

Le détendeur comporte aussi une soupape de sécurité 8 apte à limiter la pression dans la partie basse pression. La soupape de sécurité 8 est fixée radialement sur le corps, sensiblement dans le même plan radial que les raccords d'entrée 2 et de sortie 3.

Les moyens de réglage comportent en outre une vis de réglage 52 qui coopère avec un filetage dans l'axe du corps 1 à la deuxième extrémité de celui-ci. La vis de réglage 52 comporte à son extrémité un tenon 520 dont deux faces sont parallèles entre elles et à l'axe de la vis de réglage 52. Le bouton 5 est fixé sur la vis de réglage 52 par une mortaise 54 qui reçoit le tenon 520 et par une vis de fixation 53 qui se visse dans le tenon 520 et maintient le bouton en appui sur la vis de réglage 52.

Des moyens de détente 7 sont logés dans le corps 1 pour contrôler la détente du gaz entre la chambre haute pression 10 et la chambre basse pression 15. Les moyens de détente 7 comportent un équipage mobile comprenant répartis dans l'ordre le long d'un axe principal :
- un clapet 70 logé dans la chambre haute pression 10,
- un poussoir 74 logé dans la chambre basse pression 15 et en appui sur une extrémité de siège 701 du clapet 70,
- une membrane 71 délimitant en partie la chambre basse pression 15 et contre laquelle le poussoir 74 est en appui, et
- un plateau 73 en appui sur la membrane 71 du côté opposé à la chambre basse pression 15 et en réaction au poussoir 74.

Ainsi, la membrane 71 est serrée entre le poussoir 74 et le plateau 73. Les moyens de détente 7 comportent en outre un ressort de détente 72 qui prend appui d'une part sur le plateau 73, et d'autre part sur une coupelle 521 portée par la vis de réglage 52 à son extrémité opposée au tenon 520. La vis de réglage 52 comporte en outre un écrou 522 qui est fixé sur le filetage entre le corps 1 et le bouton 5, de manière à former une butée à la vis de réglage 52 dans le sens du vissage. La membrane, le plateau 73 et le ressort de détente 72 forment des moyens d'équilibrage.

Les moyens de détente 7 comportent en outre une bague 75 de forme annulaire en regard du clapet 70. La bague 75 délimite la séparation entre la chambre haute pression 10 et la chambre basse pression 15. Elle est maintenue fixe contre un épaulement du corps par un mamelon 16 vissé dans le corps. Le mamelon 16 est percé selon son axe par un perçage 160 et guide le poussoir 74 en laissant un jeu entre eux pour le passage du gaz détendu. La bague 75 comporte un orifice 751 central et porte un siège 750 au débouché de l'orifice 751 contre lequel une partie conique de l'extrémité de siège 701 du clapet 70 vient en appui.

Les moyens de détente 7 comportent aussi un ressort de clapet 76 tendant à maintenir celui-ci en appui contre le poussoir 74.

Conformément à l'invention, le détendeur comporte une chambre de compensation 77 dans laquelle une tige 702 du clapet 70 s'étend en étant montée coulissante dans l'axe principal. La chambre de compensation 77 est réalisée par un trou borgne dans le corps de diamètre égal au diamètre intérieur de la bague 75. Elle est séparée de la chambre haute pression 10 par un joint torique 78 entourant la tige 702 du clapet 70. Le joint torique 78 est logé dans une feuillure au bord du trou borgne et y est maintenu par une rondelle 79 sur laquelle le ressort de clapet 70 prend appui.

Le corps 1, le bouton 5 et la vis de réglage 52 sont réalisés par exemple par décolletage de laiton, mais ils pourraient aussi être réalisés en matière synthétique moulée. Le corps est réalisé en deux parties assemblées par vissage entre elles de manière à enserrer la membrane 71.

Le bouton 5 comporte une première gorge 50 circulaire à proximité de la jonction avec le corps 1. Une première bande 51 souple en matière synthétique et autocollante est fixée sur le fond 500 de la première gorge 50. Une échelle 511 est dessinée sur la première bande 51 souple, par exemple par sérigraphie. Par ailleurs, le bouton 5 comporte sur sa face cylindrique des reliefs aptes à faciliter sa manipulation.

Le corps 1 comporte en regard du bouton 5 pivotant une deuxième gorge 12 circulaire. Une deuxième bande 13 souple en matière synthétique et autocollante est fixée sur le fond de la deuxième gorge 12. La deuxième bande 13 comporte un repère sous la forme d'un trait 130 s'étendant selon une génératrice du corps 1.

La tension exercée par le ressort de détente 72 sur la membrane 71 détermine le niveau de pression du gaz détendu. Cette tension est modulée par la vis de réglage 52 : en vissant la vis dans le corps 1 à l'aide du bouton 5, la tension du ressort de détente 72 sur la membrane 71 est augmentée. Le maximum est atteint lorsque la vis de réglage 52 est en butée sur le corps 1 par l'intermédiaire de l'écrou 522. A l'inverse, une pression du gaz détendu plus faible est obtenue en dévissant la vis de réglage 52, jusqu'à obtenir la fermeture complète du passage de gaz.

La pression exercée par le ressort de détente 72 tend à déplacer l'équipage mobile vers le manomètre 4 de telle sorte que le clapet 70 est soulevé de son siège 750 et ouvre un passage pour le gaz de la chambre haute pression 10 vers la chambre basse pression 15 en passant l'orifice 751 de la bague 75 et dans le perçage 160 du mamelon 16. Le perçage et l'orifice forment ainsi un conduit 17 entre la chambre haute pression 10 et la chambre basse pression 15. Le gaz qui arrive dans la chambre basse pression 15 exerce une force sur la membrane 71, ce qui a tendance à compenser la force exercée par le ressort de détente 72, et donc à déplacer l'équipage mobile vers la membrane 71. Un équilibre est ainsi trouvé qui tend à maintenir une pression de gaz détendu constante, quelque soit le débit de gaz demandé.

Le clapet 70 est soumis à des forces de pression dues d'une part au gaz dans la chambre haute pression 10, et d'autre part à la pression dans la chambre de compensation 77 et à celle sur l'extrémité qui débouche dans le diamètre intérieur de la bague 75. Comme les sections projetées selon l'axe principal des surfaces dans la chambre de compensation 77 et à l'extrémité opposée sont sensiblement égales, le clapet 70 ne reçoit pas de force induite par la pression dans la chambre haute pression 10. L'équilibre de l'équipage mobile n'est donc pas influencé par la variation de pression dans la chambre haute pression 10, et donc par celle dans la bouteille de gaz.

Les bandes 51, 13 comportent des indications permettant de choisir un niveau de pression détendue pour le gaz. On peut se dispenser ainsi d'une mesure de la pression du gaz détendu par un manomètre, puisqu'une position du bouton correspond à un niveau de pression de gaz détendu, ce qui permet de simplifier le détendeur.

En utilisation, le détendeur est connecté par le raccord d'entrée 2 à une bouteille de gaz sous pression, et à un appareil consommateur du gaz sur le raccord de sortie 3. L'appareil est par exemple un chalumeau de soudage ou d'oxycoupage. On règle le bouton 5 pour qu'il soit en regard d'un repère correspondant au type d'utilisation prévue. La pression du gaz détendu se trouve automatiquement à un niveau souhaité, quelque soit le niveau de pression dans la bouteille de gaz. L'utilisateur peut également vérifier le niveau de réserve sur le manomètre 4.

L'invention n'est pas limitée au mode de réalisation qui vient d'être décrit. La chambre de compensation 77 peut être reliée à la pression atmosphérique, par exemple par un canal traversant le corps et débouchant derrière le manomètre 4. Les moyens d'équilibrage pourraient être formés par un piston à la place de la membrane. Le joint torique peut être remplacé par un autre type de joint tel qu'un joint à plusieurs lobes ou avec une section carrée.

## Revendications

1. Détendeur de gaz comprimé comportant un corps (1), une chambre haute pression (10) logée dans le corps (1) et destinée à être reliée à un réservoir de gaz comprimé, une chambre basse pression (15) pour recevoir le gaz détendu et le délivrer, des moyens de détente (7) pour réduire la pression du gaz en provenance de la chambre haute pression (10) à niveau de pression prédéterminé vers la chambre basse pression (15), les moyens de détente (7) comportant un clapet (70), un conduit (17) reliant la chambre haute pression (10) à la chambre basse pression (15), le clapet (70) étant logé dans la chambre haute pression (10) et étant en appui contre un siège (750) au débouché du conduit (17) dans la chambre haute pression (10), les moyens de détente (7) comportant en outre un poussoir (74) logé dans la chambre basse pression (15) et en contact avec le clapet (70) à travers le conduit (17) et des moyens d'équilibrage (71, 72, 73) agissant sur le clapet (70) par l'intermédiaire du poussoir (74) en fonction de la pression dans la chambre basse pression (15), **caractérisé en ce que** le clapet (70) comporte une tige (702) de section équivalente à celle du conduit (17) au niveau du siège (750), la tige (702) s'étendant jusque dans une chambre de compensation (77) séparée de manière étanche de la chambre haute pression (10).

2. Détendeur selon la revendication 1, dans lequel la chambre de compensation (77) est fermée.

3. Détendeur selon la revendication 1, dans lequel la chambre de compensation (77) est reliée à la pression atmosphérique.

4. Détendeur selon la revendication 1, dans lequel le clapet (70) est mis en appui contre le siège (750) par un ressort de clapet (70) prenant appui dans la chambre haute pression (10).

5. Détendeur selon la revendication 4, dans lequel le ressort de clapet (70) est guidé par la tige (702).

6. Détendeur selon la revendication 1, dans lequel la chambre de compensation (77) et la chambre haute pression (10) sont séparées par un joint (78) entourant la tige (702).

7. Détendeur selon la revendication 6, dans lequel le joint est un joint torique (78).

8. Détendeur selon la revendication 1, dans lequel les moyens d'équilibrage comportent une membrane (71) qui délimite la chambre basse pression (15), le poussoir (74) étant en appui contre la membrane (71).

9. Détendeur selon la revendication 8, dans lequel les moyens d'équilibrage comportent un plateau (73) en appui sur la membrane (71) par un ressort de détente (72), la membrane (71) étant interposée entre le plateau (73) et le poussoir (74).

10. Procédé de montage d'un détendeur selon l'une des revendications 1 à 9, **caractérisé en ce qu'**on insère la tige (702) dans la chambre de compensation (77) en étant à pression atmosphérique.

## Patentansprüche

1. Druckgas-Druckminderer, umfassend einen Körper (1), eine Hochdruckkammer (10), die in dem Körper (1) untergebracht und bestimmt ist, mit einem Druckgasspeicher verbunden zu sein, eine Niederdruckkammer (15) zur Aufnahme des druckgeminderten Gases und seine Bereitstellung, Druckminderungsmittel (7), um den Druck des von der Hochdruckkammer (10) in Richtung der Niederdruckkammer (15) strömenden Gases auf einen vorherbestimmten Druck zu reduzieren, wobei die Druckminderungsmittel (7) ein Ventil (70), eine die Hochdruckkammer (10) mit der Niederdruckkammer (15) verbindende Leitung (17) aufweisen, wobei das Ventil (70) in der Hochdruckkammer (10) untergebracht ist und sich auf einem Sitz (750) an der Mündung der Leitung (17) in die Hochdruckkammer (10) abstützt, wobei die Druckminderungsmittel (7) ferner einen Drücker (74) umfassen, der in der Niederdruckkammer (15) untergebracht und über die Leitung (17) mit dem Ventil (70) im Kontakt ist und Ausgleichsmittel (71, 72, 73), die über den Drücker (74) in Abhängigkeit des Drucks in der Niederdruckkammer (15) auf das Ventil (70) wirken, **dadurch gekennzeichnet, dass** das Ventil (70) eine Stange (702) mit im Bereich des Sitzes (750) äquivalentem Querschnitt zur Leitung (17) aufweist, wobei sich die Stange (702) bis in eine Ausgleichskammer (77) erstreckt, die von der Hochdruckkammer (10) dicht getrennt ist.

2. Druckminderer nach Anspruch 1, wobei die Ausgleichskammer (77) geschlossen ist.

3. Druckminderer nach Anspruch 1, wobei die Ausgleichskammer (77) mit dem atmosphärischen Druck verbunden ist.

4. Druckminderer nach Anspruch 1, wobei sich das Ventil (70) mittels einer Feder des Ventils (70), die sich in der Hochdruckkammer (10) abstützt, auf dem Sitz (750) abstützt.

5. Druckminderer nach Anspruch 4, wobei die Feder des Ventils (70) von der Stange (702) geführt wird.

6. Druckminderer nach Anspruch 1, wobei die Ausgleichskammer (77) und die Hochdruckkammer (10) von einer die Stange (702) umgebenden Dichtung (78) getrennt sind.

7. Druckminderer nach Anspruch 6, wobei die Dichtung eine O-Ring (78) ist.

8. Druckminderer nach Anspruch 1, wobei die Ausgleichsmittel eine Membran (71) aufweisen, die die Niederdruckkammer (15) begrenzt, wobei sich der Drücker (74) auf der Membran (71) abstützt.

9. Druckminderer nach Anspruch 8, wobei die Ausgleichsmittel eine Platte (73) aufweisen, die sich mittels einer Entspannungsfeder (72) auf der Membran (71) abstützt, wobei die Membran (71) zwischen der Platte (73) und dem Drücker (74) angeordnet ist.

10. Montageverfahren eines Druckminderers nach einem der Ansprüche 1 bis 9, **dadurch gekennzeichnet, dass** die Stange (702) bei atmosphärischem Druck in die Ausgleichskammer (77) eingesetzt wird.

## Claims

1. A pressure reducer for compressed gas including a body (1), a high pressure chamber (10) housed in the body (1) and intended to be connected to a compressed gas tank, a low pressure chamber (15) for receiving the expansed gas and delivering it, depressurizing means (7) for reducing the pressure of the gas from the high pressure chamber (10) to a predetermined pressure level towards the low pressure chamber (15), the depressurizing means (7) including a valve (70), a conduit (17) connecting the high pressure chamber (10) to the low pressure chamber (15), the valve (70) being housed in the high pressure chamber (10) and bearing against a seat (750) at the outlet of the conduit (17) in the high pressure chamber (10), the depressurizing means (7) further including a pusher (74) housed in the low pressure chamber (15) and in contact with the valve (70) through the conduit (17) and balancing means (71, 72, 73) acting on the valve (70) via the pusher (74) depending on the pressure in the low pressure chamber (15), **characterized in that** the valve (70) includes a rod (702) with an equivalent section to that of the conduit (17) at the seat (750), the rod (702) extending as far as in a compensation chamber (77) sealably separated from the high pressure chamber (10).

2. The pressure reducer according to claim 1, wherein the compensation chamber (77) is closed.

3. The pressure reducer according to claim 1, wherein the compensation chamber (77) is connected to atmospheric pressure.

4. The pressure reducer according to claim 1, wherein the valve (70) bears against the seat (750) by means of the valve spring (70) bearing in the high pressure chamber (10).

5. The pressure reducer according to claim 4, wherein the valve spring (70) is guided by the rod (702).

6. The pressure reducer according to claim 1, wherein the compensation chamber (77) and the high pressure chamber (10) are separated by a gasket (78) surrounding the rod (702).

7. The pressure reducer according to claim 6, wherein the gasket is an 0-ring (78).

8. The pressure reducer according to claim 1, wherein the balancing means include a membrane (71) which delimits the low pressure chamber (15), the pusher (74) bearing against the membrane (71).

9. The pressure reducer according to claim 8, wherein the balancing means include a plate (73) bearing upon the membrane (71) by means of a trigger spring (72), the membrane (71) being interposed between the plate (73) and the pusher (74) .

10. A method for mounting a pressure reducer according to one of claims 1 to 9, **characterized in that** the rod (702) is inserted into the compensation chamber (77) while being at atmospheric pressure.
